Europäisches Patentamt

European Patent Office

Office européen des brevets

(19)

(11) **EP 1 433 267 B1**

(12) **EUROPÄISCHE PATENTSCHRIFT**

(45) Veröffentlichungstag und Bekanntmachung des Hinweises auf die Patenterteilung:
**09.02.2005 Patentblatt 2005/06**

(21) Anmeldenummer: **02754421.2**

(22) Anmeldetag: **24.07.2002**

(51) Int Cl.$^7$: **H04B 1/707**

(86) Internationale Anmeldenummer:
**PCT/DE2002/002710**

(87) Internationale Veröffentlichungsnummer:
**WO 2003/032513 (17.04.2003 Gazette 2003/16)**

(54) **VERFAHREN UND EINRICHTUNG ZUR ITERATIVEN JD-ENTZERRUNG**

METHOD AND DEVICE FOR CARRYING OUT ITERATIVE JOINT DETECTION (JD) EQUALIZATION

PROCEDE ET DISPOSITIF PERMETTANT DE REALISER UNE EGALISATION DE DETECTION COMMUNE (JD) ITERATIVE

(84) Benannte Vertragsstaaten:
**DE**

(30) Priorität: **05.10.2001 DE 10149065**

(43) Veröffentlichungstag der Anmeldung:
**30.06.2004 Patentblatt 2004/27**

(73) Patentinhaber: **Infineon Technologies AG**
**81669 München (DE)**

(72) Erfinder:
• **RUPRICH, Thomas**
**80796 München (DE)**
• **BILGIC, Attila**
**85551 Kirchheim (DE)**

(74) Vertreter: **Lange, Thomas, Dr. et al**
**Patentanwälte**
**Lambsdorff & Lange**
**Dingolfinger Strasse 6**
**81673 München (DE)**

(56) Entgegenhaltungen:
• **KARIMI H R: "EFFICIENT MULTI-RATE MULTI-USER DETECTION FOR THE ASYNCHRONOUS WCDMA UPLINK" VTC 1999-FALL. IEEE VTS 50TH. VEHICULAR TECHNOLOGY CONFERENCE. GATEWAY TO THE 21ST. CENTURY COMMUNICATIONS VILLAGE. AMSTERDAM, SEPT. 19 - 22, 1999, IEEE VEHICULAR TECHNOLGY CONFERENCE, NEW YORK, NY: IEEE, US, Bd. 1 CONF. 50, September 1999 (1999-09), Seiten 593-597, XP000928917 ISBN: 0-7803-5436-2**
• **M.J. JUNTTI ET AL.: "Iterative implementation of linear multiuser detection for dynamic asynchronous CDMA systems" IEEE TRANSACTIONS ON COMMUNICATIONS, Bd. 46, Nr. 10, April 1998 (1998-04), Seiten 503-508, XP002216546**
• **R. BARRETT ET AL.: "Templates fo the solution of linear systems:buiding blocks for iterative methods" 1994 , SIAM , PHILADELPHIA, USA XP002216547 in der Anmeldung erwähnt heruntergeladen vom URL:http://citeseer.nj.nec.com/barrett93te mplates.html Absatz [2.3.1] Absatz [2.3.5]**

## Beschreibung

Die Erfindung betrifft ein Verfahren zur JD-Entzerrung eines über einen Kanal übertragenen, auf die Überlagerung mehrerer spreizkodierter Teilnehmersignale zurückgehenden empfangenen Signals sowie einen nach diesem Verfahren arbeitenden JD-Empfänger.

Im UMTS-(Universal-Mobil-Telecommunications-System-)Standard für die dritte Mobilfunkgeneration wird der TDD-(Time Division Duplex-)Mode für das sog. "unpaired band" (das für die Aufwärts- und Abwärtsstrecke gleichzeitig vorgesehene Frequenzband) vorgeschrieben. Im Gegensatz zu dem FDD-(Frequency Division Duplex-)Mode ist der Spreizfaktor beim TDD-Mode maximal gleich 16. Aufgrund dieses niedrigen Spreizfaktors ist die Einzelteilnehmerdetektion, wie Sie beispielsweise durch angepaßtes Filtern (MF: Matched Filtering) realisiert werden kann, zu ineffizient. Um eine gegebene Dienstqualität (QoS: Quality of Services) einhalten zu können, wird der Einsatz leistungsfähiger JD-(Joint Detection-)Algorithmen erforderlich.

Bei JD-Algorithmen (in der deutschen Literatur auch als Algorithmen zur "gemeinsamen Detektion" oder "Mehrteilnehmerdetektion" bezeichnet) berücksichtigt der Empfänger Signale von mehreren aktiven Teilnehmern. Das Prinzip der JD besteht darin, durch explizite Detektion nicht nur des gewünschten sondern auch der anderen Teilnehmersignale zu erreichen, dass diese nicht zur Störung beitragen. Auf diese Weise wird die Störung durch andere aktive Teilnehmer wesentlich verringert oder im Idealfall eliminiert.

Ein Nachteil der bisher bekannten JD-Algorithmen besteht darin, dass diese (aufgrund der Mehrteilnehmerdetektion) einen sehr hohen Rechenaufwand erfordern. Der hohe Rechenaufwand verhindert bisher einen Einsatz von JD-Algorithmen in Mobilstationen, da er nicht von den derzeit in Mobilstationen implementierbaren Signalprozessoren bewältigt werden kann.

Ein bekanntes aber für den Einsatz in Mobilstationen bei weitem zu rechenaufwändiges Verfahren zur Lösung des JD-Problems ist in dem Buch "Analyse und Entwurf digitaler Mobilfunksysteme" von P. Jung, B.G. Teubner Verlag Stuttgart, 1997, im Kapitel B.4.2 auf den Seiten 315-318 beschrieben. Dieser Lösungsansatz beruht auf der Cholesky-Zerlegung einer ein inhomogenes lineares Gleichungssystem definierenden Koeffizientenmatrix. Die zu zerlegende Matrix ist dabei eine quadratische Matrix mit der (großen!) Dimension (Blockgröße x Teilnehmerzahl).

In dem Artikel "A Novel and Efficient Solution to Bock-Based Joint-Detection using Approximate Cholesky Factorization", von H.R. Karimi et al., Ninth IEEE International Symposium on Personal, Indoor and Mobile Radio Communications, (Cat. No. 98TH8361), New York, Vol. 3, 1998, Seiten 1340-1345, wird eine näherungsweise Cholesky-Zerlegung vorgeschlagen. Die Näherung beruht auf der Annahme, dass die bei der Cholesky-Zerlegung erhaltenen beiden Matrizen eine blockweise Toeplitz-Struktur aufweisen. Unter dieser (nur näherungsweise richtigen) Annahme gelingt die Cholesky-Zerlegung mit geringerem Rechenaufwand. Allerdings weist die zu zerlegende Koeffizientenmatrix weiterhin die Dimension (Blockgröße x Teilnehmerzahl) auf und bleibt daher schwer zu handhaben. Nachteilig bei diesem Verfahren ist ferner, dass der durch die Näherung bewirkte Genauigkeitsverlust bei der Entzerrung nicht kontrollierbar oder einstellbar ist. Damit kann dieses Verfahren pinzipbedingt keine geforderte QoS garantieren. Wird beispielsweise aufgrund einer günstigen Kanalsituation und/oder eines Dienstes mit einer geringen QoS-Anforderung (z.B. Sprache) eine zu hohe QoS erreicht, hat dies zumeist keinen praktischen Nutzen, tritt jedoch z.B. aufgrund einer ungünstigen Kanalsituation oder eines Dienstes mit hoher QoS-Anforderung (z.B. Datenübertragung) eine zu niedrige QoS auf, kann das Verfahren nicht mehr eingesetzt werden.

In dem Artikel "Efficient multi-rate multi-user detection for the asynchronous WCDMA uplink" von H.R. Karimi, VTC 1999-Fall, IEEE 50th Vehicular technology conference, Sept. 19-22, 1999, Seiten 593-597, wird ein Verfahren sowie ein Empfänger zur J.D-Entzerrung vorgeschlagen, wobei die Entzerrung eines über einen Kanal übertragenen, auf die Überlagerung meherer Spreizkonkreter zurückgehender empfangenen Signale, durch ein inhomogenes lineares Gleichungssystem und mittels eines iterativen Lösungsverfahren gelöst wird.

In dem Artikel "Approximate and Incomplete Factorizations", von T.F. Chan et al., zu beziehen über einen Download in http://citeseer.nj.nec.com/chan94approximate.html, sind verschiedene Näherungsansätze zur Lösung eines linearen inhomogenen Gleichungssystems mittels sogenannter "preconditioners" angegeben. Dabei wird die Koeffizientenmatrix A des linearen inhomogenen Gleichungssystems Ax = b durch eine andere Matrix M ersetzt, welche die Lösung x des Gleichungssystems möglichst unverändert läßt, jedoch ein einfacher lösbares Gleichungssystem erzeugt. Diese "Präkonditionierung" des linearen Gleichungssystems kann beispielsweise durch eine ILU-Zerlegung (Incomplete LU factorization) der Matrix A erreicht werden. Das präkonditionierte lineare Gleichungssystem Mx = b kann wie in dem Artikel beschrieben durch ein iteratives Lösungsverfahren gelöst werden.

In dem Buch "Templates for the Solution of Linear Systems: Building Blocks for Iterative Methods", von R. Barrett et al., zu beziehen über einen Download in http://citeseer.nj.nec.com/barrett93templates.html, werden eine Reihe iterative Lösungsverfahren, darunter CGS (Conjugate Gradient Squared Method) und Bi-CGSTAB (BiConjugate Gradient Stabilized Method) zur Lösung eines linearen inhomogenen Gleichungssystems sowie verschiedene Präkonditionierungsalgorithmen vorgestellt.

Der Erfindung liegt die Aufgabe zugrunde, ein JD-Detektionsverfahren anzugeben, das für den Einsatz in Mobilfunksystemen geeignet ist. Insbesondere soll das Verfahren einen geringen und außerdem an die konkrete Situation (z.B. geforderte QoS, Eigenschaften des Funkkanals) möglichst flexibel anpassbaren Signalverarbeitungsaufwand aufweisen. Ferner zielt die Erfindung darauf ab, einen diese Eigenschaften aufweisenden JD-Empfänger für Mobilfunksysteme zu schaffen.

Die der Erfindung zugrundeliegende Aufgabenstellung wird durch die Merkmale der unabhängigen Ansprüche gelöst.

Demnach wird für die Entzerrung eines auf die Überlagerung mehrerer spreizkodierter Teilnehmersignale zurückgehenden empfangenen Signals in einem ersten Schritt ein inhomogenes lineares Gleichungssystem der Form $\underline{m}^{(k)}\underline{\tilde{A}} = \underline{\zeta}$ gelöst. Der Koeffizientenmatrix $\underline{\tilde{A}}$ liegt eine in ihrer Dimension gegenüber der Systemmatrix reduzierte Systemmatrix zugrunde, wobei die Elemente der reduzierten Systemmatrix Elemente der Systemmatrix sind und lediglich eine Auswahl oder Teilmenge der in einem Datenblock bzw. Burst enthaltenen Datensymbole berücksichtigt wird. Die Koeffizientenmatrix basiert auf dem empfangenen (Mehrteilnehmer-)Signal. Die Größe $\underline{m}^{(k)}$ beschreibt einen zu berechnenden Satz von Entzerrerkoeffizienten für den k-ten Teilnehmer. Die Größe $\underline{\zeta}$ beschreibt den inhomogen Teil des Gleichungssystems. In einem zweiten Schritt wird das empfangene (Mehrteilnehmer-)-Signal unter Verwendung des berechneten Satzes von Entzerrerkoeffizienten $\underline{m}^{(k)}$ für den k-ten Teilnehmer entzerrt. Dabei wird für die Lösung des inhomogenen linearen Gleichungssystems im ersten Schritt (d.h. für die Berechnung der Entzerrerkoeffizienten) ein iteratives Lösungsverfahren eingesetzt.

Ein wesentlicher Vorteil des erfindungsgemäßen Verfahrens besteht darin, dass bedingt durch die zwei Verfahrensschritte ein wesentlich geringerer Rechenaufwand für die Lösung des JD-Problems benötigt wird als beim herkömmlichen Verfahren, bei welchem dem zu lösenden linearen Gleichungssystem die komplette Systemmatrix zugrunde liegt und die Lösung dieses Gleichungssystems direkt sämtliche entzerrten Teilnehmersignale liefert. Im Gegensatz hierzu wird beim erfindungsgemäßen Verfahren keine blockweise Entzerrung vorgenommen, sondern es werden gewissermaßen als Zwischenschritt zunächst die Entzerrerkoeffizienten berechnet. Diese sind bereits dem interessierenden Teilnehmersignal zugeordnet. Mittels dieser Entzerrerkoeffizienten wird dann eine gezielte Entzerrung des empfangenen (auf alle Teilnehmersignale zurückgehenden) Signals in Bezug auf diesen k-ten Teilnehmer vorgenommen.

Die Zweiteilung des Entzerrungsprozesses ermöglicht darüber hinaus, dass die Koeffizientenmatrix des im ersten Schritt zu lösenden linearen Gleichungssystems eine wesentlich geringere (und wählbare) Dimension als die Koeffizientenmatrix hat, welche dem linearen Gleichungssystem bei der herkömmlichen JD-Entzerrung zugrunde liegt.

Ein weiterer wesentlicher Vorteil des erfindungsgemäßen Verfahrens besteht darin, dass in Folge der Verwendung eines iterativen Lösungsverfahrens zur Lösung des inhomogenen linearen Gleichungssystems im ersten Schritt eine Anspassung des Rechenaufwands an die gegebene Situation (z.B. geforderte QoS, aktuelle Kanaleigenschaften) ermöglicht wird. Eine solche "Komplexitätsanpassung" des Rechenaufwands ist bei Verwendung von direkten Lösungsansätzen (in der englischsprachigen Literatur als "direct solver" bezeichnet) wie beispielsweise der in dem eingangs genannten Artikel von H.R. Karimi vorgeschlagenen näherungsweisen Cholesky-Zerlegung nicht möglich.

Generell können beim erfindungsgemäßen Verfahren sämtliche bekannten iterativen Lösungsverfahren zum Einsatz kommen, wobei unter Stabilitäts- und Rechenaufwandsgesichtspunkten das CGS-Verfahren und das Bi-CGSTAB-Verfahren besonders geeignet erscheinen.

Bei der iterativen Lösung eines Gleichungssystems kann die Konvergenzdauer durch die Wahl des Anfangs-Entzerrerkoeffizientensatzes beeinflusst werden. In vielen Fällen, insbesondere bei unkritischen Kanalbedingungen oder geringen Anforderungen an die QoS, kann als Anfangs-Entzerrerkoeffizientensatz einfach der Nullvektor gewählt werden.

Weitere bevorzugte Möglichkeiten bestehen darin, als Anfangs-Entzerrerkoeffizientensatz entweder den den inhomogenen Teil des linearen Gleichungssystems darstellenden Vektor oder den durch die Diagonale der Koeffizientenmatrix des linearen Gleichungssystems gegebenen Vektor heranzuziehen. Sämtliche drei genannten Möglichkeiten bieten den Vorteil eines nicht vorhandenen oder nur sehr geringen Rechenaufwands.

Es besteht ferner die Möglichkeit, zur Bestimmung eines für den ersten Iterationsschritt verwendeten Anfangs-Entzerrerkoeffizientensatzes einen Präkonditionierungsalgorithmus einzusetzen. Die präkonditionierte lineare Gleichung wird hier also nicht der Iteration zugrunde gelegt sondern dient lediglich der Berechnung eines Anfangswertes für die Iteration.

Eine erste bevorzugte Möglichkeit besteht darin, als Präkonditionierungsalgorithmus eine ILU-Zerlegung vorzusehen. Auf diese Weise kann ein Anfangs-Entzerrerkoeffizientensatz errechnet werden, welcher bereits gut mit dem gesuchten Entzerrerkoeffizientensatz übereinstimmt.

Eine weitere vorteilhafte Maßnahme besteht darin, einen Präkonditionierungsalgorithmus einzusetzen, nach welchem der Anfangs-Entzerrerkoeffizientensatz unter Berücksichtigung eines in einer früheren Iteration berechneten Entzerrerkoeffizientensatzes bestimmt wird. Dem liegt zugrunde, dass sich die Systemmatrix mit der Zeit nur allmählich verändert und daher früher berechnete Entzerrerkoeffizienten auch zu einem späteren Zeitpunkt näherungsweise noch Gültigkeit haben. Durch einen solchen frühere Rechenergebnisse ausnutzenden "preconditioner" kann ebenfalls eine erhebliche Beschleunigung des Iterationsprozesses erreicht werden. Der reale Nutzen hängt dabei von Randbedingungen wie beispielsweise Geschwindigkeit, topographische Gegebenheiten (Stadt/Land/Berge) usw. ab. Die einfachste Möglichkeit besteht darin, als Anfangs-Entzerrerkoeffizientensatz den bei der letzten Iteration ermittelten Entzerrerkoeffizientensatz zu verwenden.

Wie bereits erwähnt, besteht ein wesentlicher Vorteil der erfindungsgemäßen Lösung darin, dass gezielt Abbruchkriterien für die Iteration eingesetzt werden können. Eine erste vorteilhafte Möglichkeit besteht darin, dass die Iteration abgebrochen wird, wenn der Konvergenzgrad der Iteration kleiner als ein vorgegebener erster Wert wird. Der Konvergenzgrad kann als relativer Fehler ausgedrückt werden, welcher bei der Lösung des inhomogenen linearen Gleichungssystems im aktuellen Iterationsschritt noch vorhanden ist.

Ein alternatives, ebenfalls bevorzugtes Kriterium für den Abbruch der Iteration besteht darin, dass die Iteration dann abgebrochen wird, wenn ein Maß für die im System verbliebene Mehrteilnehmer-Interferenzleistung kleiner als ein vorgegebener zweiter Wert wird.

Ferner besteht die Möglichkeit, im Rahmen der Iteration das erreichte Signal-zu-Interferenzverhältnis zu bewerten und die Iteration abzubrechen, wenn ein Maß für das erreichte Signal-zu-Interferenzverhältnis größer als ein dritter vorgegebener Wert wird.

Die ersten, zweiten und dritten Werte können variabel an die konkrete Situation (beispielsweise die Kanalverhältnisse, den übertragenen Dienst) und gegebenenfalls auch an die Hardund/oder Softwarevoraussetzungen im Empfänger angepasst werden.

Weitere vorteilhafte Ausgestaltungen der Erfindung sind in den Unteransprüchen angegeben.

Die Erfindung wird nachfolgend anhand eines Ausführungsbeispiels unter Bezugnahme auf die Zeichnung näher erläutert; in dieser zeigt:

Fig. 1    eine schematische Darstellung eines JD-Empfängers nach dem Stand der Technik in Form eines Blockschaltbilds;

Fig. 2    eine schematische Darstellung zur Veranschaulichung der Korrespondenz zwischen dem Index k für den ausgewählten Nutzer und dem Index j der Zero-Forcing-Bedingung;

Fig. 3    ein Ablaufdiagramm zur Erläuterung der iterativen Lösung eines inhomogenen linearen Gleichungssystems;

Fig. 4    eine schematische Darstellung zur Veranschaulichung eines ILU-Präkonditionierungsalgorithmus;

Fig. 5    eine schematische Darstellung eines erfindungsgemäßen JD-Empfängers in Form eines Blockschaltbilds; und

Fig. 6    eine Darstellung des Bitfehlerverhältnisses über dem mittleren Signal-zu-Interferenzverhältnis für verschiedene iterative und nicht-iterative Lösungsansätze.

Die mathematische Beschreibung der Erfindung erfolgt mit Hilfe des Matrix-Vektor-Formalismus. Im folgenden bezeichnen in Hochstellung das Zeichen T die transponierte Matrix bzw. den transponierten Vektor und das Zeichen * die komplexe Konjugation. H als hochgestelltes Zeichen steht als Abkürzung für *T. Ein Unterstrich unter einer mathematischen Größe bedeutet, daß diese komplexwertig ist bzw. sein kann.

Es werden zunächst die folgenden Abkürzungen eingeführt:

| | |
|---|---|
| K | Anzahl der aktiven Teilnehmer |
| N | Anzahl der Datensymbole in einem Block bzw. Burst |
| Q | Spreizfaktor |
| L | Kanallänge, d.h. Anzahl der im zeitdiskreten Kanalmodell berücksichtigten Wege, in Chips |
| W | Anzahl der für die Entzerrung berücksichtigten Chips |
| Ws | Anzahl der für die Entzerrung berücksichtigten Symbole, d.h. Ws=W/Q, (ggf. aufgerundet) |
| Ts | Symbolzeitdauer |
| Tc | Chipzeitdauer; es gilt $Q \cdot Tc = Ts$ |
| $\underline{d}^{(k)} = (\underline{d}_1^k ... \underline{d}_N^k)^T$ | Vektor, welcher die von dem k-ten Teilnehmer innerhalb eines Bursts ausgesendeten komplexwertigen Datensymbole $\underline{d}_1^k,..,\underline{d}_N^k$ darstellt. Die Aussendung der Datensymbo- le erfolgt im Symboltakt $1/Ts$ |
| $\underline{c}^{(k)} = (\underline{c}_1^k ... \underline{c}_Q^k)^T$ | Vektor, welcher den von dem k-ten Teilnehmer verwendeten (teilnehmerspezifischen) CD- |

MA-Code darstellt; dabei sind $\underline{c}_1^k,..,\underline{c}_Q^k$ die komplexen Chips des betrachteten CDMA-Codes.

Die Aussendung der Chips erfolgt im Chiptakt $1/T_c$

$\underline{h}^{(k)} = (\underline{h}_1^k...\underline{h}_L^k)^T$    Vektor, welcher die für den k-ten Teilnehmer gültige zeitdiskrete Kanalimpulsantwort darstellt; dabei sind $\underline{h}_1^k,..,\underline{h}_L^k$ die komplexen Gewichte (sog. Kanalkoeffizienten) des 1-ten,..,W-ten Übertragungswegs, wobei benachbarte Übertragungswege jeweils eine Zeitverzögerung entsprechend der Chipzeitdauer $T_c$ zueinander aufweisen

$\underline{b}^{(k)} = (\underline{b}_1^k...\underline{b}_{Q+L-1}^k)^T$    Vektor der kombinierten Kanalimpulsantwort, welcher sich gemäß $\underline{b}^{(k)} = \underline{c}^{(k)} * \underline{h}^{(k)}$ aus dem CDMA-Code-Vektor und dem Kanalimpulsvektor bezüglich des k-ten Teilnehmers ergibt. Dabei bezeichnet * die zeitdiskrete Faltung der genannten Vektoren

$\underline{n} = (\underline{n}_1...\underline{n}_{NQ+L-1})^T$    Vektor der additiven Störungen; der Vektor $\underline{n}$ repräsentiert sowohl thermisches Rauschen als auch Vielfachzugriffsinterferenz, wie beispielsweise Nachbarkanalinterferenz oder Interzellinterferenz. Der Zeitdiskretisierung liegt der Chiptakt $1/T_c$ zugrunde

$\underline{e} = (\underline{e}_1...\underline{e}_{NQ+L-1})^T$    Vektor des empfangenen, gestörten Datensignals; dabei sind $\underline{e}_1...\underline{e}_{NQ+L-1}$ die am Empfänger im Chiptakt $1/T_c$ erhaltenen Empfangschips.

Ausgangspunkt der folgenden Darstellung ist die (Mehrteilnehmer-)Systemgleichung in Vektor-Matrix Beschreibung basierend auf dem zeitdiskreten Übertragungsmodell. Diese Beschreibung eines Übertragungssystems ist im Stand der Technik bekannt und z.B. ausführlich in den Buch "Analyse und Entwurf digitaler Mobilfunksysteme" von P. Jung, B.G. Teubner Verlag Stuttgart, 1997, auf den Seiten 188-215 beschrieben. Diese Literaturstelle wird durch Bezugnahme Gegenstand der vorliegenden Schrift.

Um die mathematische Darstellung übersichtlicher zu halten, wird im folgenden ein Empfänger mit lediglich einer Empfangsantenne betrachtet und ferner angenommen, daß keine senderseitige Verwürfelung ("scrambling") des Signals erfolgt. Ferner wird der Einfachheit halber unterstellt, dass jeder Teilnehmer nur ein einziges gespreiztes Teilnehmersignal aussendet ("single code user communication"). Die Erfindung ist nicht auf diese Annahmen beschränkt. Die Systemgleichung lautet:

$$\underline{e} = \underline{A}\underline{d} + \underline{n} \tag{1}$$

wobei die folgende Schreibweise verwendet wird:

$$\underline{d} = (\underline{d}^{(1)T}...\underline{d}^{(K)T})^T = (\underline{d}_1^1...\underline{d}_N^1, \underline{d}_1^2...\underline{d}_N^2,..., \underline{d}_1^K...\underline{d}_N^K)^T$$

$$\underline{A} = \left(\underline{A}_{\mu,\nu}\right) \text{ mit } \quad \mu=1,..,NQ+L-1 \quad \text{(Anzahl der Zeilen)}$$
$$\nu=1,..,KN \quad\quad \text{(Anzahl der Spalten)}$$

Die Elemente der Systemmatrix $\underline{A}$ sind definiert durch die Komponenten des Vektors $\underline{b}^{(k)}$ der kombinierten Kanalimpulsantwort gemäß der folgenden Beziehung:

$$\underline{A}_{Q(n-1)+l,N(k-1)+n} = \begin{cases} \underline{b}_l^k & \text{für} & k = 1,..,K \\ & & l = 1,..,Q+L-1 \\ & & n = 1,..,N \\ \\ 0 & \text{sonst} \end{cases} \tag{2}$$

Somit ist der Vektor $\underline{e}$ der Ausgang eines durch die Systemmatrix $\underline{A}$ beschriebenen Übertragungssystems, das mit dem (auf alle aktiven Teilnehmer zurückgehenden) Eingabevektor $\underline{d}$ gespeist wird und ferner einen durch den Vektor $\underline{n}$ beschriebenen additiven Rauschbeitrag aufweist.

Das von der Systemmatrix $\underline{A}$ beschriebene System umfaßt den Kanal und gegebenenfalls auch die Struktur des Empfängers (z.B. Anzahl der Antennen (hier nicht berücksichtigt), Überabtastung). Der Kanal im obigen Sprachgebrauch beinhaltet den physikalischen Kanal sowie die senderseitige Signalbearbeitung (verwendete Blockstruktur, Spreizcodes und Verwürfelungscodes, wobei letztere, wie bereits erwähnt, hier der Einfachheit halber nicht berücksichtigt werden).

Die Systemmatrix $\underline{A}$ ist im Empfänger näherungsweise bekannt: Denn der physikalische Kanal wird gemäß üblichem Vorgehen durch einen Kanalschätzer geschätzt und durch seine (geschätzten) Kanalkoeffizienten (Vektoren $\underline{h}^{(k)}$) beschrieben, Spreiz- und ggf. eingesetzte Verwürfelungscodes werden als bekannt vorausgesetzt.

Der (System-)Eingabevektor $\underline{d}$ ist im Empfänger unbekannt. Das Ziel der Datendetektion besteht darin, für einen oder mehrere Teilnehmer im Empfänger einen oder mehrere geschätzte Vektoren $\underline{\hat{d}}^{(k)} = (\underline{\hat{d}}_1^k ... \underline{\hat{d}}_N^k)^T$ zu ermitteln, welcher bzw. welche möglichst gut mit dem oder den entsprechenden gesendeten Vektor bzw. Vektoren $\underline{d}^{(k)} = (\underline{d}_1^k ... \underline{d}_N^k)^T$ übereinstimmt bzw. übereinstimmen.

ML (Maximum Likelihood) und MAP (Maximum a-posteriori) Kriterien können aufgrund ihres zu hohen Rechenaufwands zur Lösung des JD-Problems (d.h. zur Lösung der Systemgleichung (1)) nicht verwendet werden.

Zur Lösung des JD-Problems wird das Übertragungssystem einschließlich des Empfängers durch das lineare Gleichungssystem

$$\underline{\hat{d}} = \underline{S}\,\underline{e} \tag{3}$$

beschrieben.

Analog zu dem Eingabevektor $\underline{d}$ wird dabei der alle aktiven Teilnehmer betreffende (System-)Schätzvektor $\underline{\hat{d}}$ durch die Folge der geschätzten Datensymbole gebildet:

$$\underline{\hat{d}} = (\underline{\hat{d}}^{(1)T} ... \underline{\hat{d}}^{(K)T})^T = (\underline{\hat{d}}_1^1 ... \underline{\hat{d}}_N^1,\ \underline{\hat{d}}_1^2 ... \underline{\hat{d}}_N^2, ... \underline{\hat{d}}_1^K ... \underline{\hat{d}}_N^K)^T$$

$\underline{S}$ ist eine $(KN \times NQ+L-1)$-Matrix und bestimmt die Art des Datendetektors. $\underline{S}$ wird im folgenden als Schätzmatrix bezeichnet.

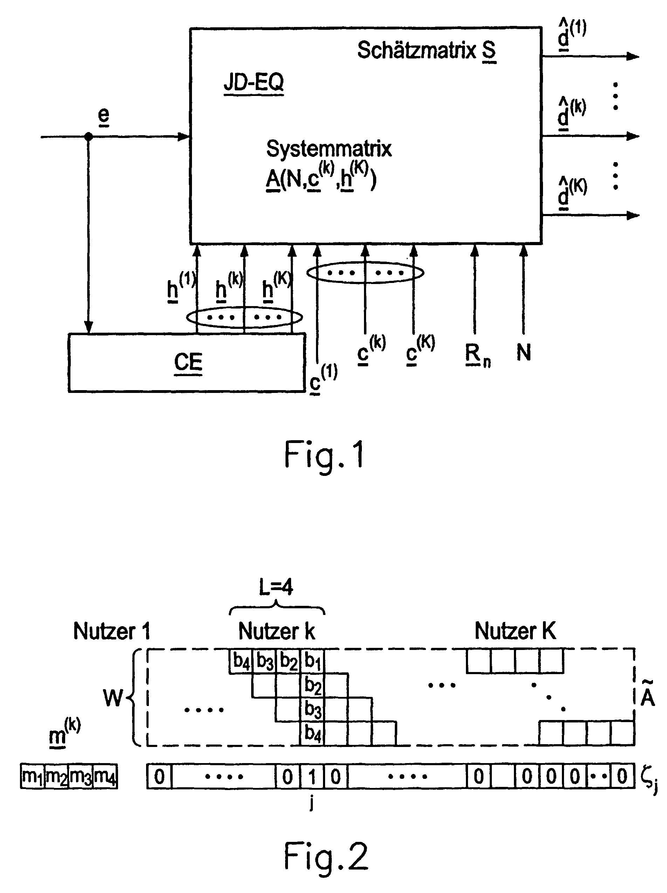

Fig. 1 veranschaulicht die als solche bekannte Struktur eines JD-Empfängers. Der JD-Empfänger umfaßt einen Kanalschätzer CE und einen JD-Entzerrer JD-EQ. Wie bereits erwähnt, empfängt der JD-Empfänger den zeitdiskretisierten Vektor $\underline{e}$ des Empfangssignals und führt diesen sowohl dem Kanalschätzer CE als auch dem JD-Entzerrer JD-EQ zu. Geschätzt werden in dem JD-Empfänger gemäß dem Stand der Technik die Vektoren $\underline{d}^{(k)}$ für sämtliche aktiven Teilnehmer k = 1,..,K. Um diese geschätzten Vektoren zu bestimmen, nutzt der JD-Entzerrer JD-EQ Informationen hinsichtlich des Kanals, nämlich die Anzahl N der Datensymbole pro Datenblock oder Burst, die von den aktiven Teilnehmern verwendeten Spreizcodes $\underline{c}^{(k)}$, k = 1,..,K, sowie die von dem Kanalschätzer CE auf der Basis des Empfangssignals ermittelten Kanalimpulsantworten $\underline{h}^{(k)}$. Ferner kann statistische Information in Form der Kovarianzmatrix $\underline{R}_n$ in die Datendetektion eingehen. Die Kovarianzmatrix $\underline{R}_n$ ist definiert durch den Ausdruck

$$\underline{R}_n = E\{\underline{n}\,\underline{n}^H\}.$$

Ein bekanntes Konzept zur Lösung des JD-Problems ist ZF (Zero Forcing). Bei ZF wird die folgende Schätzmatrix verwendet:

$$\underline{S} = (\underline{A}^H \underline{R}_n^{-1} \underline{A})^{-1} \underline{A}^H \underline{R}_n^{-1} \tag{4}$$

Im einfachsten Fall, ohne Berücksichtigung jedweder Störung, ist $\underline{R}_n$ = Id. Id bezeichnet die Identitätsmatrix.

Durch Einsetzen der Schätzmatrix $\underline{S}$ gemäß Gleichung (4) in Gleichung (3) ergibt sich das Gleichungssystem:

$$\underline{A}^H \underline{R}_n^{-1} \underline{A} \, \hat{\underline{d}} = \underline{A}^H \underline{R}_n^{-1} \underline{e} \overset{\text{def}}{=} \underline{g} \tag{5}$$

Der übliche Weg zur Lösung dieses Gleichungssystems (5) basiert auf der sogenannten Cholesky-Zerlegung der (KN x KN)-Matrix $\underline{A}^H \underline{R}_n^{-1} \underline{A}$ auf der linken Seite des Gleichungssystems (5). Bei der Cholesky-Zerlegung wird diese Matrix in eine untere Dreiecksmatrix (d.h. eine Matrix, in der sämtliche Elemente in der rechten oberen Diagonalhälfte der Matrix gleich Null sind) ist und in eine obere Dreiecksmatrix (d.h. eine Matrix, in der sämtliche Elemente in der linken unteren Diagonalhälfte der Matrix gleich Null sind) zerlegt. Beide Dreiecksmatrizen sind $KN \times KN$-Matrizen. Aufgrund der Dreiecksgestalt dieser beiden Matrizen kann das lineare inhomogene Gleichungssystem $\underline{A}^H \underline{R}_n^{-1} \underline{A} \, \hat{\underline{d}} = \underline{g}$ dann durch zwei Rekursionen in entgegengesetzten Richtungen gelöst werden. Als Lösung ergibt sich direkt der alle Teilnehmer betreffende (System-)Schätzvektor $\underline{d}$. Eine detaillierte Darstellung der Cholesky-Zerlegung ist in dem eingangs genannten Buch von P. Jung auf den Seiten 315-318 gegeben.

Im folgenden wird die Vorgehensweise bei der erfindungsgemäßen symbolweisen Entzerrung beschrieben. Diese erfolgt in zwei Schritten.

1. Schritt:

Im ersten Schritt wird zunächst eine reduzierte Systemmatrix $\tilde{\underline{A}}$ gebildet. Die reduzierte Systemmatrix $\tilde{\underline{A}}$ ist eine (W x K(L+W-1))-Matrix, wobei W eine für die Entzerrung verwendete Anzahl von Chips ist und als "Entzerrerlänge" bezeichnet wird. W ist wählbar, wobei $Q \leq W < NQ$ gilt. D.h., in dieser Matrix wird lediglich eine Auswahl oder Teilmenge der in einem Datenblock bzw. Burst enthaltenen Datensymbole berücksichtigt. Die reduzierte Systemmatrix $\tilde{\underline{A}}$ ist dem Empfänger durch Schätzung der Kanalkoeffizienten (Vektoren $\underline{h}^{(k)}$) analog zu der Systemmatrix $\underline{A}$ näherungsweise bekannt.

Die Definition der reduzierten Systemmatrix $\tilde{\underline{A}}$ lautet:

$$\tilde{\underline{A}}_{Q(w_s-1)+q,(W+L-1)k+w_s-1} = \begin{cases} \underline{b}_l^k & \text{für} \quad \begin{aligned} k &= 1,..,K \\ l &= 1,..,Ws+L-1 \\ w_s &= 1,..,Ws \\ q &= 1,..,Q \end{aligned} \\ \\ 0 & \text{sonst} \end{cases} \tag{6}$$

(L+W-1) stellt die Einflußlänge eines gesendeten Chips auf die Chipfolge des empfangenen Datensignals dar. Wie bereits erwähnt wird mit Ws = W/Q die Entzerrerlänge W in Einheiten von Datensymbolen (Ws wird bei nicht ganzzahligem Quotient aufgerundet) bezeichnet. Es wird darauf hingewiesen, daß die Blockgröße N in die Definition der reduzierte Systemmatrix nicht eingeht.

Die der Gleichung (1) entsprechende Systemgleichung lautet

$$\tilde{\underline{e}} = \tilde{\underline{A}}\tilde{\underline{d}} + \tilde{\underline{n}} \tag{7}$$

wobei $\tilde{\underline{e}}$ und $\tilde{\underline{n}}$ den Vektoren $\underline{e}$ und $\underline{n}$ entsprechen, jedoch jeweils $W\times 1$ (Spalten-)Vektoren mit einer der Entzerrerlänge entsprechenden Zeilenanzahl sind.

Im folgenden wird zur Vereinfachung der Darstellung ein rauschfreier Kanal, d.h. $\tilde{\underline{n}} = (0..0)^T$, angenommen. Die Erfindung ist nicht auf diesen Spezialfall beschränkt.

In dem ersten Schritt werden nun unter Verwendung der reduzierten Systemmatrix $\tilde{\underline{A}}$ die Koeffizienten eines Entzerrers, hier dargestellt in Form eines Entzerrervektors $\underline{m}$, berechnet. Der Berechnung der Entzerrerkoeffizienten liegt die ZF-Be-

dingung

$$\underline{m}\tilde{A} = \zeta_j \qquad (8)$$

zugrunde. Dabei ist $\underline{m}$ ein $1 \times W$ (Zeilen-)Vektor, welcher die Entzerrerkoeffizienten enthält und $\zeta_j$ ist ein $1 \times K(L+W-1)$ (Zeilen-)Vektor, der die ZF-Bedingung bezüglich eines bestimmten (k-ten) Teilnehmers vorgibt.

Der ZF-Vektor $\zeta_j$ läßt sich folgendermaßen darstellen:

$$\zeta_j = (0...0\ 1\ 0...0) \qquad (9)$$

wobei die 1 an der j-ten Position des Vektors steht. Die j-te Position ist einerseits direkt einem zu detektierenden Datensymbol zugeordnet und wählt andererseits, wie im folgenden noch näher erläutert, einen bestimmten Nutzer (im folgenden als k-ten Nutzer bezeichnet) aus der Mehrzahl der Nutzer aus.

Zur Lösung des Gleichungssystems (8) wird dieses umgeformt in:

$$\underline{m}\tilde{A}\tilde{A}^H = \zeta_j\tilde{A}^H \stackrel{\text{def}}{=} \underline{a}_j^H \qquad (10)$$

Der (Zeilen-)Vektor $\underline{a}_j^H$ ist von der Dimension $1 \times W$ und wird durch den Ausdruck $\zeta_j\underline{\tilde{A}}^H$ definiert.

Die Gleichung (10) stellt genauso wie die Gleichung (5) ein inhomogenes lineares Gleichungssystem dar. Die wesentlichen Unterschiede zwischen diesen beiden Gleichungssystemen bestehen darin,

- dass die im Gleichungssystem (5) auftretende Koeffizientenmatrix $\underline{A}^H\underline{R}_n^{-1}\underline{A}$ eine in der Regel wesentlich größere Dimension (nämlich $(KN \times KN)$) als die im Gleichungssystem (10) auftretende Koeffizientenmatrix $\underline{\tilde{A}}\tilde{A}^H$ der Dimension $(W \times W)$ aufweist; und
- dass durch Lösung des Gleichungssystems (5) unmittelbar die JD-Entzerrungsaufgabe gelöst ist, während die Lösung des Gleichungssystems (10) zunächst nur ein "teilnehmerbezogenes Zwischenergebnis" (nämlich den Entzerrer $\underline{m}$ für den k-ten Teilnehmer) des JD-Problems liefert.

In einer früheren Patentanmeldung DE 101 06 391.1 wurde die Lösung des Gleichungssystems (10) durch Cholesky-Zerlegung der $(W \times W)$-Matrix $\underline{\tilde{A}}\tilde{A}^H$ beschrieben. Im Unterschied dazu wird erfindungsgemäß ein später noch näher zu beschreibendes iteratives Lösungsverfahren eingesetzt.

Bei der Lösung des Gleichungssystems (10) erzwingt die ZF-Bedingung $\zeta_j$ daß der Entzerrervektor für den k-ten Teilnehmer berechnet wird. Dabei ist j so zu wählen, daß $\underline{a}_j$ zur kombinierten Kanalimpulsantwort $\underline{b}_l^k$ des ausgewählten Nutzers k korrespondiert. Die Korrespondenz zwischen k und dem Index j der Zero-Forcing-Bedingung wird für das Beispiel $W = 4$ und $L = 4$ durch die in Fig. 2 gezeigte Darstellung verdeutlicht.

Das Gleichungssystem (10) kann natürlich auch für jeden der K Teilnehmer mit der entsprechenden ZF-Bedingung, gegeben durch einen der ZF-Vektoren $\zeta_j$ gemäß Gleichung (9), gelöst werden. Der für den k-ten Teilnehmer berechnete Entzerrervektor wird im folgenden mit $\underline{m}^{(k)}$ bezeichnet.

<u>2. Schritt:</u>

Nach der Lösung des Gleichungssystems (10) wird in einem zweiten Schritt der empfangene Datenstrom mit Hilfe des zuvor berechneten Entzerrervektors $\underline{m}^{(k)}$ für den k-ten Teilnehmer Symbol für Symbol detektiert. Der zweite Schritt ist im unteren Teil der Fig. 2 veranschaulicht. Die Detektion erfolgt durch Kreuzkorrelation der Chips des empfangenen Datensignals mit den für den k-ten Nutzer berechneten Entzerrerkoeffizienten nach der Gleichung

$$\underline{\hat{d}}^{\prime(k)} = \underline{M}^{(k)}\underline{e}^{\prime} \qquad (11)$$

Dabei ist $\underline{e}^{\prime}$ ein $Q(Ws+N-1) \times 1$ Spaltenvektor der empfangenen Chipfolge, $\underline{\hat{d}}^{\prime(k)}$ bezeichnet den erfindungs-

gemäß berechneten Schätzvektor für $\underline{d}^{(k)}$ und die Matrix $\underline{M}^{(k)}$ ist eine $N \times Q(Ws+N-1)$ Matrix, welche sich in folgender Weise aus dem Entzerrervektor $\underline{m}^{(k)}$ aufbaut:

$$\underline{M}^{(k)} = \begin{bmatrix} m_W^k & m_{W-1}^k & \cdots & m_{Q+1}^k & m_Q^k & \cdots & m_1^k & 0 & \cdots & & 0 \\ 0 & \cdots & m_W^k & \cdots & \cdots & \cdots & m_{Q+1}^k & m_Q^k & \cdots & m_1^k & \cdots & 0 \\ \vdots & & & & \ddots & & & & & \\ \vdots & & & & & \ddots & & & & \\ 0 & & \cdots & & & & & & \cdots & m_1^k \end{bmatrix} \qquad (12)$$

Das heißt, in jeder Zeile der Matrix $\underline{M}^{(k)}$ sind die Elemente des Entzerrervektors $\underline{m}^{(k)}$ eingetragen und bezüglich benachbarter Zeilen jeweils um Q Stellen versetzt zueinander angeordnet. Die restlichen Elemente der Matrix sind Nullen.

Aus der Gleichung (11) folgt, daß für die Berechnung eines Datensymbols aus dem Entzerrervektor $\underline{m}^{(k)}$ lediglich W komplexe Multiplikationen benötigt werden. Dieser zusätzliche Aufwand gegenüber der Lösung des auf der nicht reduzierten Systemmatrix $\underline{A}$ basierenden Gleichungssystems (5) ist wesentlich geringer als die erreichte Rechenersparnis durch Verwendung des Gleichungssystems (10), dem die reduzierte Systemmatrix $\underline{\tilde{A}}$ zugrunde liegt.

Im folgenden wird nun die iterative Lösung des Gleichungssystems (10) im ersten Schritt beschrieben. Zur besseren Übersichtlichkeit werden die folgende Abkürzungen eingeführt:

$$\underline{\hat{A}} = \underline{\tilde{A}}\,\underline{\tilde{A}}^H$$

$$\underline{z} = \underline{a}_j^H$$

Das Gleichungssystem (10) lautet dann:

$$\underline{m}\,\underline{\hat{A}} = \underline{z} \qquad (13)$$

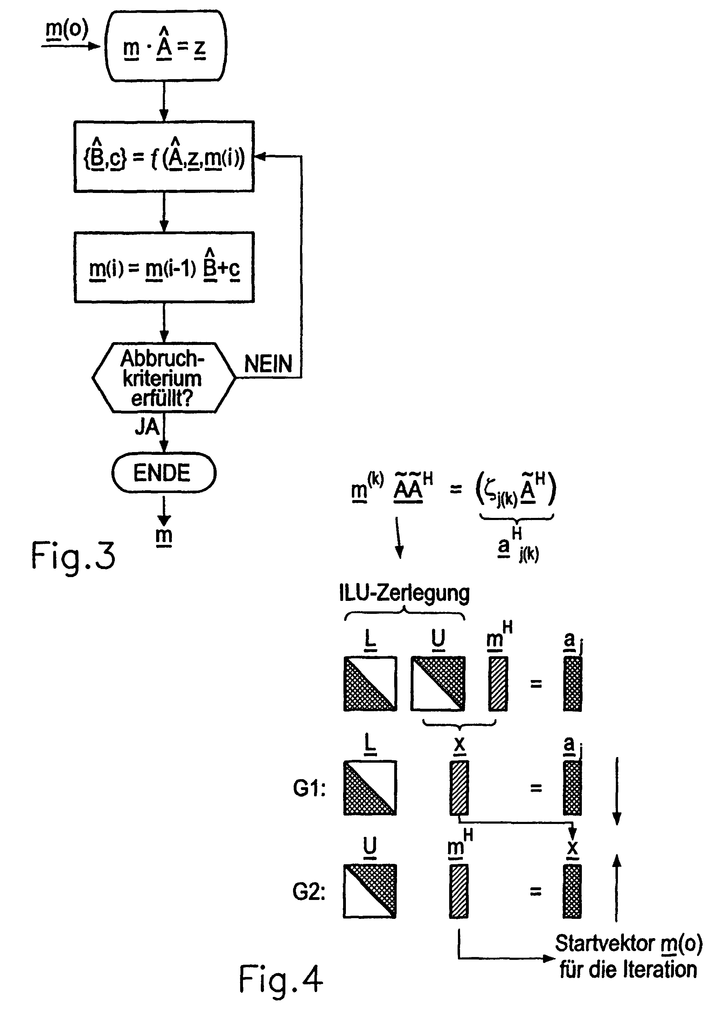

Nach Fig. 3 wird mittels eines Anfangs-Entzerrers $\underline{m}(0)$ aus diesem Gleichungssystem nach einer verfahrensspezifischen Vorschrift, welche hier allgemein durch

$$f\left(\underline{\hat{A}},\ \underline{z},\ \underline{m}(i)\right)$$

angegeben ist, die Iterationsmatrix $\underline{\hat{B}}$ und der Iterationsvektor $\underline{c}$ berechnet. Die Dimensionen der Matrizen $\underline{\hat{B}}$ und $\underline{\hat{A}}$ sowie der Vektoren $\underline{c}$ und $\underline{z}$ sind jeweils identisch, die geschweifte Klammer in Fig. 3 deutet lediglich eine symbolische Gruppierung der beiden Größen $\underline{B}$ und $\underline{c}$ an. Die verfahrensspezifische Vorschrift $f(\cdot)$ ist durch das verwendete lineare Iterationsverfahren, z.B. CGS oder Bi-CGSTAB, bestimmt.

In einem nächsten Schritt wird aus der Iterationsmatrix $\underline{\hat{B}}$ und dem Iterationsvektor $\underline{c}$ nach der Gleichung

$$\underline{m}(i) = \underline{m}(i-1)\,\underline{\hat{B}} + \underline{c} \qquad (14)$$

ein neuer Entzerrer $\underline{m}(i)$ berechnet. Dabei bezeichnet i den Iterationsindex, welcher die aktuelle Anzahl der durchlaufenen Schleifen angibt.

Anschließend wird ein Abbruchkriterium für die Iteration überprüft. Wenn das Abbruchkriterium erfüllt ist, wird die Iteration abgebrochen und der zuletzt berechnete Entzerrer $\underline{m}(i)$ stellt die Lösung des inhomogenen linearen Gleichungssystems (10) dar. Falls das Abbruchkriterium nicht erfüllt ist, geht die Iteration in die nächste Schleife über, i wird inkrementiert und es wird mit Hilfe der Gleichung (14) ein neuer Entzerrer $\underline{m}(i)$ berechnet.

Auf diese Weise erfolgt eine sukzessive Approximation der Lösung, die allerdings nicht zwingend stetig verläuft. Sowohl die Wahl des Abbruchkriteriums als auch dessen Dimensionierung sind applikationsabhängig.

Neben den bereits genannten iterativen Lösungsverfahren CGS und Bi-CGSTAB können gegebenenfalls noch weitere nichtstationäre iterative Lösungsverfahren eingesetzt werden. CGS ist in Kapitel 2.3.7 auf den Seiten 25 bis 27, siehe insbesondere das Programm-Template in Fig. 2.9, und Bi-CGSTAB ist auf den Seiten 27 und 28, siehe insbesondere das Programm-Template in Fig. 2.10, des Buches "Templates for the Solution of Linear Systems: Building Blocks for Iterative Methods", von R. Barrett et al., zu beziehen über einen Download in http://citeseer.nj.nec.com/barrett93templates.html, beschrieben. Der Inhalt dieses Buches und insbesondere der Inhalt der genannten Textstellen wird durch Bezugnahme dem Offenbarungsgehalt der Anmeldung hinzugefügt.

Im folgenden werden verschiedene Möglichkeiten für das Abbruchkriterium angegeben.

Eine erste Möglichkeit besteht darin, ein Abbruchkriterium

$$\frac{\left\|\underline{m}(i)\underline{\hat{A}} - \underline{z}\right\|}{\left\|\underline{z}\right\|} \leq \varepsilon \tag{15}$$

vorzusehen. Dieses Abbruchkriterium mißt den im i-ten Iterationsschritt erreichten Konvergenzgrad und bricht die Iteration ab, wenn dieser einen Wert kleiner als $\varepsilon$ hat.

Neben diesem Standard-Abbruchkriterium können auch Abbruchkriterien herangezogen werden, die besser an verschiedene Applikationen anpassbar sind. Es wird daran erinnert, dass das Ziel des JD-Verfahrens darin besteht, Störungen (Interferenzen) durch andere Teilnehmer gezielt zu eliminieren. Für ein reales Empfängerkonzept ist jedoch eine komplette Eliminierung solcher Interferenzen unter Aufwand-Nutzenaspekten nicht praktikabel. Ziel ist es vielmehr, ein gewisses erforderliches Maß an Interferenzunterdrückung zu gewährleisten, beispielsweise durch Vorgabe eines gewünschten minimalen Signalzu-Interferenzverhältnisses oder einer maximal tolerierbaren Interferenzleistung.

Für einen nicht die exakte Lösung des Gleichungssystems (10) darstellenden Entzerrer, wie er beispielsweise durch den im i-ten Iterationsschritt berechneten Entzerrer $\underline{m}(i)$ realisiert ist, folgt aus den Gleichungen (8) und (9) der folgende Ausdruck:

$$\underline{m}(i)\underline{\tilde{A}} = \left(\varepsilon_1 \cdots \varepsilon_{j-1} \quad 1 + \varepsilon_j \quad \varepsilon_{j+1} \cdots \varepsilon_{K(L+W-1)}\right). \tag{16}$$

$\varepsilon_1,...,\varepsilon_{K(L+W-1)}$ sind klein im Vergleich zu 1 und nähern sich mit wachsender Lösungsgenauigkeit von $\underline{m}(i)$ dem Wert 0. Dabei stellen $\varepsilon_{j'}$ mit $j' \neq j$ ein Maß für die Restinterferenz der jeweiligen j'-ten Interferenzkomponente und $1+\varepsilon_j$ (entspricht der Position j' = j) ein Maß für die detektierte Signalleistung dar. Es ergeben sich die beiden folgenden pragmatischen Abbruch-Kriterien:

- die Iteration wird abgebrochen, wenn die im System verbliebene Interferenzleistung kleiner als ein Wert $E_{inter}$ wird

$$\left\|\underline{m}(i)\underline{\tilde{A}}\right\|_{j'\neq j} \leq E_{inter} \tag{17}$$

- Die Iteration wird abgebrochen, wenn ein Maß für das erreichte Signal-zu-Interferenzverhältnis größer als ein Wert $SIR_{target}$ wird:

$$\frac{\left\|\underline{m}(i)\underline{\tilde{A}}\right\|_{j'=j}}{\left\|\underline{m}(i)\underline{\tilde{A}}\right\|_{j'\neq j}} \geq SIR_{target} \tag{18}$$

Dabei bezeichnet $E_{inter}$ die maximal zulässige Interferenzleistung und $SIR_{target}$ das minimal zulässige Signalzu-Interferenzverhältnis im detektierten Signal.

Eine weitere erfindungsgemäße Maßnahme besteht in der Wahl eines geeigneten Anfangs-Entzerrers $\underline{m}(0)$ für die Entzerrung. Die im folgenden vorgeschlagenen fünf Möglichkeiten unterscheiden sich durch den Rechenaufwand, der für die Ermittlung des Anfangs-Entzerrers $\underline{m}(0)$ erforderlich ist, und durch die mit dem Anfangs-Entzerrer $\underline{m}(0)$ bereits erreichte Approximation an die exakte Lösung.

- Man startet die Iteration mit dem Nullvektor, d.h. $\underline{m}(0) = \underline{0}$. Nachteilig ist die in der Regel lange Konvergenzzeit. Vorteilhaft ist, dass der Anfangs-Entzerrer $\underline{m}(0)$ ohne zusätzlichen Rechenaufwand erhältlich ist.

- Man startet die Iteration mit $\underline{m}(0) = \underline{a}_j^H$, d.h. der rechten Seite des Gleichungssystems (10). Dieser Ansatz liefert in der Regel eine deutlich bessere Startbedingung als $\underline{m}(0) = \underline{0}$. Ein weiterer Vorteil ist, dass wiederum praktisch kein zusätzlicher Rechenaufwand für die Erzeugung des Anfangs-Entzerrers $\underline{m}(0)$ anfällt.

Weitere Möglichkeiten basieren darauf, die Iteration mit einem Anfangs-Entzerrer $\underline{m}(0)$ zu starten, welcher durch einen Algorithmus mit (möglichst) geringer Komplexität berechnet wird und bereits eine Näherungslösung des gesuchten Entzerrers $\underline{m}^{(k)}$ dargestellt. Zur Berechnung dieser Anfangs-Entzerrer $\underline{m}(0)$ können insbesondere "preconditioners" eingesetzt werden.

- Man startet die Iteration mit einem Anfangs-Entzerrer $\underline{m}(0)$, dessen Elemente durch die Diagonale der reduzierten Systemmatrix $\underline{\tilde{A}}$ gegeben sind. Vorteil ist auch hier der geringe Rechenaufwand für die Bestimmung von $\underline{m}(0)$.

- Man startet die Iteration mit einem Anfangs-Entzerrer $\underline{m}(0)$, der durch eine ILU-Zerlegung der Matrix $\underline{\tilde{A}}\underline{\tilde{A}}^H$ und das Lösen des daraus resultierenden linearen Gleichungssystems gewonnen wird. Vorteilhaft ist hier die in der Regel wesentlich kürzere Konvergenzzeit der nachfolgenden Iteration. Nachteilig ist der zusätzliche Rechenaufwand, der für die Berechnung des Anfangs-Entzerrers $\underline{m}(0)$ anfällt.

- Man startet die Iteration zum Zeitpunkt t mit einem Anfangs-Entzerrer $\underline{m}_t(0)$, der identisch mit dem Lösungsvektor für den Entzerrungsvektor $\underline{m}$ zum vorhergehenden Schätzzeitpunkt t-1, d.h. dem bei der vorhergehenden Iteration berechneten Entzerrungsvektor $\underline{m}_{t-1}$, ist: $\underline{m}_t(0) = \underline{m}_{t-1}$.

Bei der ILU-Zerlegung wird nur eine Untermenge der Matrixelemente der zu zerlegenden Matrix $\underline{\tilde{A}}\underline{\tilde{A}}^H$ berücksichtigt. Dabei gibt es verschiedene Ansätze und Kriterien zur Auswahl der Untermenge, z.B. die Struktur der zu zerlegenden Matrix oder eine Toleranzgrenze für die zu berücksichtigenden Werte der zu zerlegenden Matrix. Eine Beschreibung möglicher ILU-Ansätze ist in dem bereits genannten Artikel von F. Chan oder auch in dem Artikel "ILUT: A Dual Threshold Incomplete LU Factorization", von Y. Saad, angegeben. Letzterer ist unter der Web-Adresse http://citeseer.nj.nec.com/saad94ilut.html per Download erhältlich.
Fig. 4 veranschaulicht eine ILU-Zerlegung anhand der Gleichung (10), welche für den k-ten Teilnehmer

$$\underline{m}^{(k)}\underline{\tilde{A}}\underline{\tilde{A}}^H = \varsigma_{j(k)}\underline{\tilde{A}}^H \stackrel{def}{=} \underline{a}_{j(k)}^H$$

lautet und für einen oder mehreren der zu detektierenden Teilnehmer gelöst werden muß.
Die Zerlegung von $\underline{A}\underline{\tilde{A}}^H$ ergibt die untere Dreiecksmatrix $\underline{L}$ (für "Lower") und die obere Dreiecksmatrix $\underline{U}$ (für "Upper").
Beide Matrizen $\underline{L}$ und $\underline{U}$ sind $W \times W$-Matrizen. Bekannte Größen in Fig. 4 sind dunkel unterlegt, unbekannte Größen sind gestreift dargestellt.
Der unbekannte Vektor $\underline{x}$, der aus dem Matrix-Vektor-Produkt von $\underline{U}$ und $\underline{m}^H$ folgt, kann durch das rekursive Auflösen eines trivialen linearen inhomogenen Gleichungssystems G1 mit der Koeffizientenmatrix $\underline{L}$, beginnend mit der ersten Komponente von $\underline{x}$, bestimmt werden. Dieses rekursive Auflösen des Gleichungssystems G1 wird in Fig. 4 durch einen von oben nach unten gerichteten Pfeil verdeutlicht.
Mit Hilfe des nun bekannten Vektors $\underline{x}$ werden die Komponenten des Vektors $\underline{m}^H$ aus einem zweiten trivialen Gleichungssystem G2 mit der Koeffizientenmatrix $\underline{U}$, beginnend mit der letzten Komponente von $\underline{m}^H$, rekursiv bestimmt. Der Ablauf der rekursiven Auflösung des zweiten trivialen Gleichungssystems G2 wird durch einen von unten nach oben gerichteten Pfeil verdeutlicht. Nach Auflösung des Gleichungssystems G2 ist die Näherungslösung für $\underline{m}^H$ berechnet. Diese wird (nach einer Transposition und Konjugation) als Startvektor $\underline{m}(0)$ bei der nachfolgenden Iteration eingesetzt.

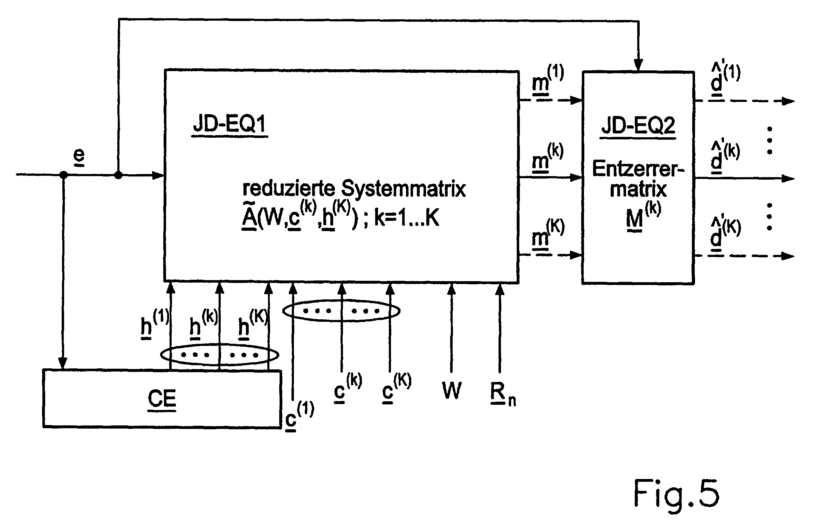

Fig. 5 zeigt eine schematische Darstellung der funktionalen Struktur eines erfindungsgemäßen JD-Entzerrers. Dieselben oder vergleichbare Teile wie in der Fig. 1 sind mit denselben Bezugszeichen versehen.
Eine erste Recheneinheit JD-EQ1 dient zur Durchführung des ersten Verfahrensschrittes, d.h. der iterativen Berechnung eines oder mehrerer Entzerrer $\underline{m}^{(k)}$ für einen bzw. mehrere Teilnehmer. Anstelle der Blocklänge N wird hier die Entzerrerlänge W vorgegeben.
Einer zweiten Recheneinheit JD-EQ2 werden der bzw. die Entzerrer $\underline{m}^{(k)}$ zugeführt. Diese Einheit führt den zweiten Verfahrensschritt durch, d.h. berechnet aus dem (den) Entzerrer(n) $\underline{m}^{(k)}$ und den einlaufenden empfangenen Datensymbolen $\underline{e}$ (es werden nur die Q(Ws+N-1) Datensymbole des Vektors $\underline{e}'$ benötigt) die entzerrten Datensymbole $\underline{d}'^{(k)}$.

Selbstverständlich müssen die beiden Recheneinheiten JD-EQ1 und JD-EQ2 nicht in Form einzelner Recheneinheiten ausgeführt sein, sondern können beliebige Realisierungen in Bezug auf ihren Aufbau und ihre Hardware-Software-Konzeption aufweisen.

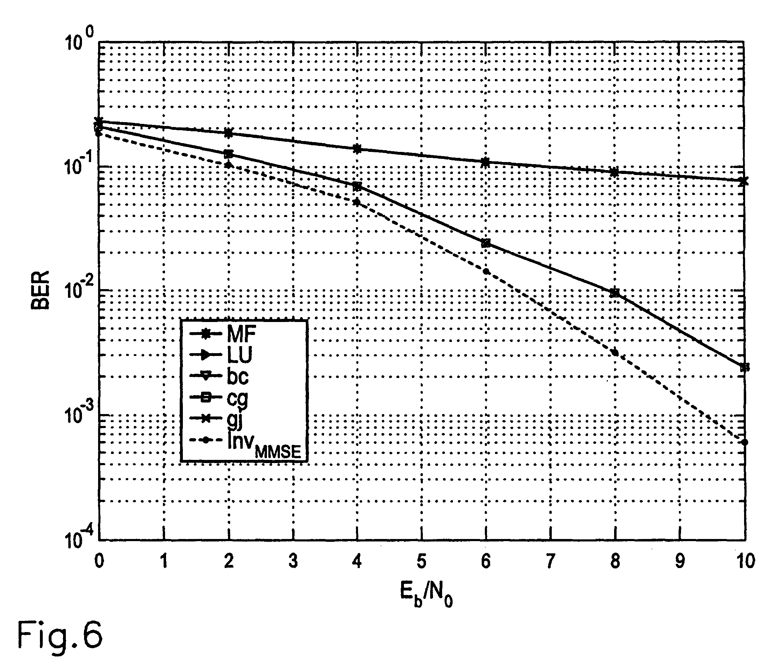

Fig. 6 zeigt ein Diagramm, in welchem das Bitfehlerverhältnis (BER) in logarithmischer Teilung über dem mittleren Signal-Interferenz-Verhältnis $E_b/N_0$ aufgetragen ist ($E_b$ bezeichnet die mittlere Energie, welche einem einzigen Datenbit am Empfängereingang zugeordnet ist, $N_0$ bezeichnet die spektrale Interferenzleistungsdichte am Empfängereingang). Die dargestellten Kurven wurden für verschiedene Empfängerkonzepte ermittelt. Die Kurve MF bezeichnet ein Matched-Filter-Konzept und ergibt das schlechteste Empfängerverhalten. Die punktierte Kurve $Inv_{MMSE}$ gibt das Empfängerverhalten bei einer exakten MMSE-(Minimum Mean Square Error-)Detektion mittels Matrix-Inversion an. Dazwischen liegen die sich überdeckenden Kurven, welche bei einer Lösung des linearen inhomogenen Gleichungssystems (10) mittels des Gauss-Jordan-Verfahrens (gj), der vollständigen LU-Faktorisierung (LU) sowie den beiden erfindungsgemäßen Iterationsverfahren Bi-CGSTAB (bc) und CGS (cg) erhalten werden. Es wird deutlich, dass durch die erfindungsgemäßen Iterationsverfahren vergleichbar gute Ergebnisse wie durch die genannten anderen Verfahren erreicht werden können.

## Patentansprüche

1. Verfahren zur JD-Entzerrung eines über einen Kanal übertragenen, auf die Überlagerung mehrerer spreizkodierter Teilnehmersignale zurückgehenden empfangenen Signals, wobei

 - in einem ersten Schritt durch Lösen eines inhomogenen linearen Gleichungssystems der Form $\underline{m}^{(k)}\underline{\tilde{A}} = \underline{\zeta}$ ein Satz von Entzerrerkoeffizienten für den k-ten Teilnehmer berechnet wird, wobei

 -- der Koeffizientenmatrix $\underline{\tilde{A}}$ eine in ihrer Dimension gegenüber der Systemmatrix reduzierte Systemmatrix zugrunde liegt, wobei die Elemente der reduzierten Systemmatrix Elemente der Systemmatrix sind und lediglich eine Auswahl oder Teilmenge der in einem Datenblock bzw. Burst enthaltenen Datensymbole berücksichtigt wird, und die Koeffizientenmatrix $\underline{\tilde{A}}$ auf dem auf die mehreren Teilnehmer zurückgehenden empfangenen Signal basiert,
 -- die Größe $\underline{m}^{(k)}$ einen zu berechnenden Satz von Entzerrerkoeffizienten für den k-ten Teilnehmer beschreibt, und
 -- die Größe $\underline{\varsigma}$ den inhomogen Teil des Gleichungssystems beschreibt; und

 - in einem zweiten Schritt das auf die mehreren Teilnehmer zurückgehende empfangene Signal unter Verwendung des berechneten Entzerrerkoeffizientensatzes $\underline{m}^{(k)}$ für den k-ten Teilnehmer entzerrt wird; wobei
 - für die Lösung des inhomogenen linearen Gleichungssystems im ersten Schritt ein iteratives Lösungsverfahren eingesetzt wird.

2. Verfahren nach Anspruch 1,
 **dadurch gekennzeichnet,**
 **dass** die der Koeffizientenmatrix des linearen Gleichungssystems zugrundeliegende reduzierte Systemmatrix ($\underline{\tilde{A}}$) eine reduzierte Systemmatrix der Dimension W $\times$ K(L+W-1) ist, wobei W eine wählbare Anzahl der für die Entzerrung berücksichtigten Chips, L die Kanallänge in Chips und K die Anzahl der aktiven Teilnehmer ist.

3. Verfahren nach Anspruch 1 oder 2,
 **dadurch gekennzeichnet,**

 - **dass** das iterative Lösungsverfahren ein CGS-Verfahren ist.

4. Verfahren nach Anspruch 1 oder 2,
 **dadurch gekennzeichnet,**

 - **dass** das iterative Lösungsverfahren ein Bi-CGSTAB-Verfahren ist.

5. Verfahren nach einem der vorhergehenden Ansprüche,

**dadurch gekennzeichnet,**

- **dass** ein für den ersten Iterationsschritt verwendeter Anfangs-Entzerrerkoeffizientensatz ($\underline{m}^{(k)}(0)$) der Nullvektor ist.

6. Verfahren nach einem der Ansprüche 1 bis 4,
**dadurch gekennzeichnet,**

- **dass** ein für den ersten Iterationsschritt verwendeter Anfangs-Entzerrerkoeffizientensatz ($\underline{m}^{(k)}(0)$) der den inhomogenen Teil des linearen Gleichungssystems darstellende Vektor ist.

7. Verfahren nach einem der Ansprüche 1 bis 4,
**dadurch gekennzeichnet,**

- **dass** ein für den ersten Iterationsschritt verwendeter Anfangs-Entzerrerkoeffizientensatz ($\underline{m}^{(k)}(0)$) der durch die Diagonale der Koeffizientenmatrix des linearen Gleichungssystems gegebene Vektor ist.

8. Verfahren nach einem der Ansprüche 1 bis 4,
**dadurch gekennzeichnet,**

- **dass** zur Bestimmung eines für den ersten Iterationsschritt verwendeten Anfangs-Entzerrerkoeffizientensatzes ($\underline{m}^{(k)}(0)$) ein Präkonditionierungsalgorithmus (preconditioner) eingesetzt wird.

9. Verfahren nach Anspruch 8,
**dadurch gekennzeichnet,**

- **dass** der Präkonditionierungsalgorithmus eine ILU-Zerlegung ist.

10. Verfahren nach Anspruch 8,
**dadurch gekennzeichnet,**

- **dass** ein Präkonditionierungsalgorithmus eingesetzt wird, nach welchem der Anfangs-Entzerrerkoeffizientensatz ($\underline{m}^{(k)}(0)$) unter Berücksichtigung eines in einer früheren Iteration berechneten Entzerrerkoeffizientensatzes bestimmt wird.

11. Verfahren nach einem der vorhergehenden Ansprüche,
**gekennzeichnet durch** den Schritt:

- dass die Iteration abgebrochen wird, wenn der Konvergenzgrad der Iteration kleiner als ein erster Wert ($\varepsilon$) wird.

12. Verfahren nach einem der Ansprüche 1 bis 10,
**dadurch gekennzeichnet,**

- **dass** die Iteration abgebrochen wird, wenn ein Maß für die im System noch vorhandene Interferenzleistung kleiner als ein zweiter Wert ($E_{inter}$) wird:

13. Verfahren nach einem der Ansprüche 1 bis 10,
**dadurch gekennzeichnet,**

- **dass** die Iteration abgebrochen wird, wenn ein Maß für das erreichte Signal-zu-Interferenzverhältnis größer als ein dritter Wert ($SIR_{target}$) wird.

14. Verfahren nach einem der vorhergehenden Ansprüche,
**dadurch gekennzeichnet,**

- **daß** das Verfahren für die Entzerrung von Signalen im TDD-unpaired band des UMTS-Standards für Mobilfunk eingesetzt wird.

**15.** JD-Empfänger zur Entzerrung eines über einen Kanal übertragenen, auf die Überlagerung mehrerer spreizkodierter Teilnehmersignale zurückgehenden empfangenen Signals, mit

- einem ersten Berechnungsmittel (JD-EQ1), welches ausgelegt ist, durch Lösen eines inhomogenen linearen Gleichungssystems der Form $\underline{m}^{(k)}\tilde{A} = \underline{\zeta}$ einen Satz von Entzerrerkoeffizienten für den k-ten Teilnehmer zu berechnen, wobei

  -- der Koeffizientenmatrix $\tilde{A}$ eine in ihrer Dimension gegenüber der Systemmatrix reduzierte Systemmatrix zugrunde liegt, wobei die Elemente der reduzierten Systemmatrix Elemente der Systemmatrix sind und lediglich eine Auswahl oder Teilmenge der in einem Datenblock bzw. Burst enthaltenen Datensymbole berücksichtigt wird, und die Koeffizientenmatrix $\tilde{A}$ auf dem auf die mehreren Teilnehmer zurückgehenden empfangenen Signal basiert,
  -- die Größe $\underline{m}^{(k)}$ einen zu berechnenden Satz von Entzerrerkoeffizienten für den k-ten Teilnehmer beschreibt, und
  -- die Größe $\underline{\varsigma}$ den inhomogen Teil des Gleichungssystems beschreibt; und

- mit einem zweiten Berechnungsmittel (JD-EQ2), welches das auf die mehreren Teilnehmer zurückgehende empfangene Signal unter Verwendung des berechneten Entzerrerkoeffizientensatzes $\underline{m}^{(k)}$ für den k-ten Teilnehmer entzerrt, wobei
- das erste Berechnungsmittel (JD-EQ2) für die Lösung des inhomogenen linearen Gleichungssystems ein iteratives Lösungsverfahren einsetzt.

**16.** JD-Empfänger nach Anspruch 15,
**dadurch gekennzeichnet,**
**dass** eine der Koeffizientenmatrix des linearen Gleichungssystems zugrundeliegende Systemmatrix ($\tilde{A}$) eine reduzierte Systemmatrix der Dimension W × K(L+W-1) ist, wobei W eine wählbare Anzahl der für die Entzerrung berücksichtigten Chips, L die Kanallänge in Chips und K die Anzahl der aktiven Teilnehmer ist.

**17.** JD-Empfänger nach Anspruch 15 oder 16,
**dadurch gekennzeichnet,**

- **dass** das iterative Lösungsverfahren ein CGS-Verfahren ist.

**18.** JD-Empfänger nach Anspruch 15 oder 16,
**dadurch gekennzeichnet,**

- **dass** das iterative Lösungsverfahren ein Bi-CGSTAB-Verfahren ist.

**Claims**

**1.** Method for JD equalization of a received signal which has been transmitted via one channel and is based on the superimposition of two or more spread-coded subscriber signals, with

- a set of equalizer coefficients for the k-th subscriber being calculated in a first step by solving an inhomogeneous linear equation system of the form $\underline{m}^{(k)}\tilde{A} = \underline{\zeta}$, with

  -- the coefficient matrix $\tilde{A}$ being based on a system matrix whose dimension is less than that of the system matrix, with the elements of the reduced system matrix being elements of the system matrix and only a selection or subset of the data symbols contained in a data block or burst being taken into account, and the coefficient matrix $\tilde{A}$ being based on the received signal from the two or more subscribers,
  -- the variable $\underline{m}^{(k)}$ describes a set of equalizer coefficients to be calculated for the k-th subscriber, and
  -- the variable $\underline{\zeta}$ describes the inhomogeneous part of the equation system; and

- the received signal from the two or more subscribers is equalized in a second step using the calculated equalizer coefficient set $\underline{m}^{(k)}$ for the k-th subscriber; with
- an iterative solution method being used for the solution of the inhomogeneous linear equation system in the first step.

**2.** Method according to Claim 1,
**characterized**
**in that** the reduced system matrix (Ã) which is based on the coefficient matrix of the linear equation system is a reduced system matrix of dimension W x K(L+W-1), where W is a number which can be selected of chips which are taken into account in the equalization process, L is the channel length in chips, and K is the number of active subscribers.

**3.** Method according to Claim 1 or 2,
**characterized**

- **in that** the iterative solution method is a CGS method.

**4.** Method according to Claim 1 or 2,
**characterized**

- **in that** the iterative solution method is a Bi-CGSTAB method.

**5.** Method according to one of the preceding claims,
**characterized**

- **in that** an initial equalizer coefficient set ($\underline{m}^{(k)}(0)$) which is used for the first iteration step is the zero vector.

**6.** Method according to one of Claims 1 to 4,
**characterized**

- **in that** an initial equalizer coefficient set ($\underline{m}^{(k)}(0)$) which is used for the first iteration step is the vector which represents the inhomogeneous part of the linear equation system.

**7.** Method according to one of Claims 1 to 4,
**characterized**

- **in that** an initial equalizer coefficient set ($\underline{m}^{(k)}(0)$) which is used for the first iteration step is the vector which is defined by the diagonal of the coefficient matrix of the linear equation system.

**8.** Method according to one of Claims 1 to 4,
**characterized**

- **in that** a preconditioning algorithm (preconditioner) is used for determination of an initial equalizer coefficient set ($\underline{m}^{(k)}(0)$) which is used for the first iteration step.

**9.** Method according to Claim 8,
**characterized**

- **in that** the preconditioning algorithm is an ILU breakdown.

**10.** Method according to Claim 8,
**characterized**

- **in that** a preconditioning algorithm is used, on the basis of which the initial equalizer coefficient set ($\underline{m}^{(k)}(0)$) is determined taking into account an equalizer coefficient set which was calculated in a previous iteration.

**11.** Method according to one of the preceding claims,
**characterized by** the following step:

- in that the iteration is terminated when the convergence degree of the iteration is less than a first value ($\varepsilon$).

**12.** Method according to one of Claims 1 to 10,
**characterized**

- **in that** the iteration is terminated when a measure for the interference power which is still present in the system becomes less than a second value ($E_{inter}$).

13. Method according to one of Claims 1 to 10,
    **characterized**

    - **in that** the iteration is terminated when a measure for the achieved signal-to-interference ratio becomes greater than a third value ($SIR_{target}$).

14. Method according to one of the preceding claims,
    **characterized**

    - **in that** the method is used for the equalization of signals in the TDD unpaired band of the UMTS Standard for mobile radio.

15. JD receiver for equalization of a received signal which is transmitted via one channel and is based on the superimposition of two or more spread-coded subscriber signals, having

    - a first calculation means (JD-EQ1) which is designed to calculate a set of equalizer coefficients for the k-th subscriber by solving an inhomogeneous linear equation system in the form $\underline{m}^{(k)}\underline{\tilde{A}} = \underline{\zeta}$, with

        -- the coefficient matrix $\underline{\tilde{A}}$ being based on a system matrix whose dimension is less than that of the system matrix, with the elements of the reduced system matrix being elements of the system matrix and only a selection or subset of the data symbols contained in a data block or burst being taken into account, and the coefficient matrix $\underline{\tilde{A}}$ being based on the received signal from the two or more subscribers,
        -- the variable $\underline{m}^{(k)}$ describes a set of equalizer coefficients to be calculated for the k-th subscriber, and
        -- the variable $\underline{\zeta}$ describes the inhomogeneous part of the equation system; and

    - having a second calculation means (JD-EQ2) which equalizes the received signal from the two or more subscribers using the calculated equalizer coefficient set $\underline{m}^{(k)}$ for the k-th subscriber, with
    - the first calculation means (JD-EQ2) using an iterative solution method for the solution of the inhomogeneous linear equation system.

16. JD receiver according to Claim 15,
    **characterized**
    **in that** a system matrix ($\underline{\tilde{A}}$) which is based on the coefficient matrix of the linear equation system is a reduced system matrix of the dimension $W \times K(L+W-1)$, where W is a number which can be selected of chips which are taken into account in the equalization process, L is the channel length in chips, and K is the number of active subscribers.

17. JD receiver according to Claim 15 or 16,
    **characterized**

    - **in that** the iterative solution method is a CGS method.

18. JD receiver according to Claim 15 or 16,
    **characterized**

    - **in that** the iterative solution method is a Bi-CGSTAB method.

**Revendications**

1. Procédé d'égalisation de détection commune d'un signal transmis par un canal et reçu se rapportant à la superposition de plusieurs signaux d'abonnés à étalement de code, dans lequel

    - on calcule dans une première étape par résolution d'un système d'équations linéaires qui ne sont pas homo-gènes de la forme $\underline{m}^{(k)}\underline{\tilde{A}} = \underline{\zeta}$, un jeu de coefficients pour le k ième abonné dans lequel,

16

    -- la matrice $\underline{\tilde{A}}$ des coefficients est à la base d'une matrice de système réduite en dimension par rapport à la matrice du système, les éléments de la matrice réduite du système étant des éléments de la matrice du système et seulement une sélection ou une partie des symboles de données contenus dans un bloc ou une salve de données étant prise en compte et la matrice $\underline{\tilde{A}}$ des coefficients étant basée sur le signal reçu se rapportant aux plusieurs abonnés,

    -- la grandeur $\underline{m}^{(k)}$ décrit un jeu à calculer de coefficients d'égalisation pour le k ième abonné, et

    -- la grandeur $\underline{\zeta}$ décrit la partie qui n'est pas homogène du système d'équations; et

    - dans une deuxième étape, on égalise le signal reçu se rapportant aux plusieurs abonnés en utilisant le jeu $\underline{m}^{(k)}$ de coefficients d'égalisation calculé pour le k ième abonné; dans lequel

    - on utilise un procédé de résolution itératif pour résoudre la système d'équations linéaires qui ne sont pas homogènes dans la première étape.

**2.** Procédé suivant la revendication 1,
    **caractérisé**
**en ce que** la matrice ($\underline{\tilde{A}}$) réduite du système à la base de la matrice des coefficients du système d'équations linéaires est une matrice de système réduite de dimension W x K (L+W-1), W étant un nombre que l'on peut sélectionner des puces à prendre en compte pour l'égalisation, L étant la longueur de canal dans les puces et K le nombre des abonnés actifs.

**3.** Procédé suivant la revendication 1 ou 2,
    **caractérisé**

    - **en ce que** le procédé de résolution par itération est un procédé CGS.

**4.** Procédé suivant la revendication 1 ou 2,
    **caractérisé**

    - **en ce que** le procédé de résolution par itération est un procédé Bi-CGSTAB.

**5.** Procédé suivant l'une des revendications précédentes,
    **caractérisé**

    - **en ce qu'**un jeu ($\underline{m}^{(k)}(0)$) de coefficients d'égalisation initial utilisé pour la première étape d'itération est le vecteur nul.

**6.** Procédé suivant l'une des revendications 1 à 4,
    **caractérisé**

    - **en ce qu'**un jeu ($\underline{m}^{(k)}(0)$) de coefficients d'égalisation initial utilisé pour la première étape d'itération est le vecteur représentant la partie qui n'est pas homogène du système d'équations linéaires.

**7.** Procédé suivant l'une des revendications 1 à 4,
    **caractérisé**

    - **en ce qu'**un jeu ($\underline{m}^{(k)}(0)$) de coefficients d'égalisation initial utilisé pour la première étape d'itération est le vecteur donné par les diagonales de la matrice de coefficients du système d'équations linéaires.

**8.** Procédé suivant l'une des revendications 1 à 4,
    **caractérisé**

    - **en ce que** pour la détermination d'un jeu ($\underline{m}^{(k)}(0)$) de coefficients d'égalisation initial utilisé pour la première étape d'itération, on utilise un algorithme de préconditionnement (préconditionneur).

**9.** Procédé suivant la revendication 8,
    **caractérisé**

    - **en ce que** l'algorithme de préconditionnement est une décompostion ILU.

**10.** Procédé suivant la revendication 8,
**caractérisé**

- **en ce que** l'on utilise un algorithme de préconditionnement suivant lequel le jeu $(\underline{m}^{(k)}(0))$ de coefficients d'égalisation initial est déterminé en tenant compte d'un jeu de coefficients d'égalisation calculé dans une itération précédente.

**11.** Procédé suivant l'une des revendications précédentes,
**caractérisé par** l'étape:

- on ce qu'on interrompt l'itération lorsque le degré de convergence de l'itération est inférieur à une première valeur $(\varepsilon)$.

**12.** Procédé suivant l'une des revendications 1 à 10,
**caractérisé**

- **en ce que** l'on interrompt l'itération lorsqu'une mesure de la puissance d'interférence encore présente dans le système est inférieure à une deuxième valeur $(E_{inter})$.

**13.** Procédé suivant l'une des revendications 1 à 10,
**caractérisé**

- **en ce que** l'on interrompt l'itération lorsqu'une mesure du rapport signal à interférence qui a été atteint est supérieur à une troisième valeur $(SIR_{target})$.

**14.** Procédé suivant l'une des revendications précédentes,
**caractérisé**

- **en ce qu'**on utilise le procédé pour l'égalisation de signaux dans la bande non-appariée TDD du standard UMTS pour la radio communication mobile.

**15.** Récepteur de détection commune pour l'égalisation d'un signal transmis par un canal reçu se rapportant à la superposition de plusieurs signaux d'abonnés à étalement de code, comprenant

- un premier moyen (JD-EQ1) de calcul, qui est conçu pour calculer par résolution d'un système d'équations linéaires qui ne sont pas homogènes de la forme $\underline{m}^{(k)}\underline{\tilde{A}} = \underline{\zeta}$, un jeu de coefficients d'égalisation pour le k ième abonné, dans lequel

    -- la matrice $\underline{\tilde{A}}$ des coefficients est à la base d'une matrice de système réduite en dimension par rapport à la matrice du système, les éléments de la matrice réduite du système étant des éléments de la matrice du système et seulement une sélection ou une partie des symboles de données contenus sans un bloc ou une salve de données étant prise en compte et la matrice $\underline{\tilde{A}}$ des coefficients étant basée sur le signal reçu se rapportant aux plusieurs abonnés,
    -- la grandeur $\underline{m}^{(k)}$ décrit un jeu à calculer de coefficients d'égalisation pour le k ième abonné, et
    -- la grandeur $\underline{\zeta}$ décrit la partie qui n'est pas homogène du système d'équations; et

- comprenant un deuxième moyen (JD-EQ2) de calcul, qui égalise le signal reçu se rapportant aux plusieurs abonnés en utilisant le jeu $\underline{m}^{(k)}$ de coefficients d'égalisation calculé pour le k ième abonné, dans lequel
- le premier moyen (JD-EQ1) utilisé pour la résolution du système d'équations linéaires qui ne sont pas homogènes est un procédé de résolution par itération.

**16.** Récepteur de détection commune suivant la revendication 15,
**caractérisé**
**en ce que** la matrice $(\underline{\tilde{A}})$ réduite du système à la base de la matrice des coefficients du système d'équations linéaires est une matrice de système réduite de dimension W x K (L+W-1), W étant un nombre que l'on peut sélectionner des puces à prendre en compte pour l'égalisation, L étant la longueur de canal dans les puces et K le nombre des abonnés actifs.

**17.** Récepteur de détection commune suivant la revendication 15 ou 16, **caractérisé**

- **en ce que** le procédé de résolution par itération est un procédé CGS.

**18.** Récepteur de détection commune suivant la revendication 15 ou 16, **caractérisé**

- **en ce que** le procédé de résolution par itération est un procédé Bi-CGSTAB.

Fig.1

Fig.2

Fig.3

Fig.4

JD-EQ1

reduzierte Systemmatrix
$\underline{\tilde{A}}(W, \underline{c}^{(k)}, \underline{h}^{(K)})$ ; k=1...K

$\underline{e}$

$\underline{m}^{(1)}$

$\underline{m}^{(k)}$

$\underline{m}^{(K)}$

JD-EQ2

Entzerrermatrix
$\underline{M}^{(k)}$

$\underline{\hat{d}}'^{(1)}$

$\underline{\hat{d}}'^{(k)}$

$\underline{\hat{d}}'^{(K)}$

$\underline{h}^{(1)}$  $\underline{h}^{(k)}$  $\underline{h}^{(K)}$

$\underline{c}^{(1)}$  $\underline{c}^{(k)}$  $\underline{c}^{(K)}$  W  $\underline{R}_n$

$\underline{CE}$

Fig.5

Fig.6